# EUROPEAN PATENT APPLICATION

(11) **EP 4 779 843 A1**
(43) Date of publication of application: **22.07.2026**
(21) Application number: 25218567.3
(22) Date of filing: 26.11.2025
(51) Int. Cl.: H02J 9/06, H02J 3/00, H02J 7/00, H02J 3/007, H02J 7/80, H02J 3/0012, H02J 3/32, H02J 3/38, H02J 3/388, H02J 7/35

(54) **ENERGY STORAGE POWER SUPPLY SYSTEM, METHOD OF CONTROL, AND GRID CONNECTED/OFF GRID POWER SOCKET**

(30) Priority: 21.08.2025 CN 202511182775; 21.08.2025 CN 202521794079 U
(71) Applicant: Shenzhen Hello Tech Energy Co., Ltd, Shenzhen, Guangdong 518109 (CN)
(72) Inventor: YANG, Yuanchi, Shenzhen, 518109 (CN); WANG, Xiaoping, Shenzhen, 518109 (CN)
(74) Representative: Dehns Germany Partnerschaft mbB

(57) **Abstract**

Provided is an energy storage power supply system (100). A grid-connected receptacle (21) of a grid-connected/off-grid socket (20) is connected to a grid-connected port (11) of an all-in-one energy storage unit (10). An off-grid receptacle (22) of the grid-connected/off-grid socket (20) is connected to an off-grid port (12) of the all-in-one energy storage unit (10). A bypass switch (23) of the grid-connected/off-grid socket (20) is connected between the grid-connected receptacle (21) and the off-grid receptacle (22). The bypass switch (23) is configured to be switched on in response to a grid-connected operation mode; and further configured to be switched off in response to a detection of a power outage of a grid (200) and switching of the all-in-one energy storage unit (10) to an off-grid operation mode, maintaining power supply continuity during the switching.

## Description

### FIELD

The present disclosure relates to the technical field of energy storage power supply devices, and more particularly, to an energy storage power supply system, a method for controlling the same, and a grid-connected/off-grid socket.

### BACKGROUND

A home energy storage system is a high-capacity, stationary energy storage device that requires professional mounting and wiring modifications. A core function of the home energy storage system is to store surplus photovoltaic electricity or off-peak electricity, aiming to improve energy self-sufficiency, reduce electricity bills, and automatically and seamlessly switch to provide uninterrupted power supply to essential or whole-house loads during a power outage of a grid.

A balcony photovoltaic-storage system is a miniaturized, modular, plug-and-play energy storage device that does not require wiring modifications. A core purpose of the balcony photovoltaic-storage system is to utilize a balcony space for power generation to supply low-power loads and partially reduce electricity bills. Also, the balcony photovoltaic-storage system possesses a portable and mobile attribute (usable outdoors). However, during a power outage of a grid, a grid-connected port of the balcony photovoltaic-storage system will stop supplying power, and consequently, a load located on a branch circuit and connected to the grid-connected port will also experience a power outage. A user has to manually switch a plug of the load to an off-grid port to restore power supply. Thus, the uninterrupted power supply cannot be achieved.

Even if the uninterrupted power supply can also be achieved based on a professional modification on household wiring externally connected to the balcony photovoltaic-storage system, the user cannot arbitrarily alter the modified external connection wiring due to safety considerations after such a wiring modification, thereby losing the critical properties of portability and mobility of the balcony photovoltaic-storage system. That is, the user could no longer unplug a corresponding cable and take the balcony photovoltaic-storage system outdoors for use. Therefore, the related art lacks a solution for uninterruptedly providing a core load with power supply while maintaining the properties of portability and mobility of the balcony photovoltaic-storage system.

### SUMMARY

Embodiments of the present disclosure provide an energy storage power supply system, a method for controlling an energy storage power supply system, and a grid-connected/off-grid socket, to solve at least one of the above technical problems.

According to an embodiment of the present disclosure, an energy storage power supply system includes an all-in-one energy storage unit and a grid-connected/off-grid socket. The all-in-one energy storage unit has a grid-connected port and an off-grid port. The grid-connected/off-grid socket includes a grid-connected receptacle, an off-grid receptacle, and a bypass switch connected between the grid-connected receptacle and the off-grid receptacle. The grid-connected receptacle is connected to the grid-connected port of the all-in-one energy storage unit through a first pluggable connector, and the grid-connected receptacle is configured to electrically connect to a main distribution box at a grid side. The off-grid receptacle is connected to the off-grid port of the all-in-one energy storage unit through a second pluggable connector, and the off-grid receptacle is configured to electrically connect to a sub-distribution box at a core load side. The bypass switch is configured to be switched on in a grid-connected operation mode of the all-in-one energy storage unit, enabling electrical energy provided by a grid to be supplied to the sub-distribution box through the main distribution box and the bypass switch, and/or enabling electrical energy provided by the all-in-one energy storage unit to be supplied to the sub-distribution box through the grid-connected port, the first pluggable connector, the grid-connected receptacle, the bypass switch, and the off-grid receptacle. The bypass switch is further configured to be switched off in response to a detection of a power outage of the grid and switching of the all-in-one energy storage unit to an off-grid operation mode, enabling the electrical energy provided by the all-in-one energy storage unit to be supplied to the sub-distribution box through the off-grid port, the second pluggable connector and the off-grid plug, and keeping continuous power supply to the sub-distribution box during the switching. The first pluggable connector and the second pluggable connector are capable of being unplugged from the grid-connected/off-grid socket, to separate the all-in-one energy storage unit from the grid-connected/off-grid socket

The energy storage power supply system of the present disclosure, on one hand, achieves cooperative power supply of the grid and the all-in-one energy storage unit during a grid-connected operation and a smooth transition to isolation of the grid and independent power supply by the all-in-one energy storage unit during an off-grid operation, through a configuration of the bypass switch, ensuring flexibility and reliability of the energy storage power supply system. On the other hand, through the grid-connected/off-grid socket and the pluggable connector, the all-in-one energy storage unit can be in a pluggable connection with the distribution box. In this way, a "plug-and-play" capability is achieved while guaranteeing the original grid-connected/off-grid function, which facilitates mounting, maintenance, and replacement, and it is convenient for a user to move the all-in-one energy storage unit to other occasions requiring power usage, thereby meeting more user demands.

Additional aspects and advantages of the embodiments of the present disclosure will be provided at least in part in the following description, or will become apparent at least in part from the following description, or can be learned from practicing of the embodiments of the present disclosure.

### BRIEF DESCRIPTION OF THE DRAWINGS

In order to clearly explain technical solutions of embodiments of the present disclosure, drawings used in description of the embodiments are briefly described below. Obviously, the drawings as described below are merely some embodiments of the present disclosure. Based on these drawings, other drawings can be obtained by those skilled in the art without creative effort.
FIG. 1 is a schematic circuit diagram of an energy storage power supply system according to an embodiment of the present disclosure.
FIG. 2 is a schematic scenario diagram of an energy storage power supply system according to an embodiment of the present disclosure.
FIG. 3 is a schematic circuit diagram of an all-in-one energy storage unit of an energy storage power supply system according to an embodiment of the present disclosure.
FIG. 4 is a schematic circuit diagram of a grid-connected/off-grid socket of an energy storage power supply system according to an embodiment of the present disclosure.
FIG. 5 is a flowchart illustrating a method for controlling an energy storage power supply system according to some embodiments of the present disclosure.
FIG. 6 is a flowchart illustrating a method for controlling an energy storage power supply system according to some embodiments of the present disclosure.
FIG. 7 is a flowchart illustrating a method for controlling an energy storage power supply system according to some embodiments of the present disclosure.

### DETAILED DESCRIPTION

Embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and are intended to explain, rather than limit, the present disclosure. In the description of the present disclosure, it should be understood that, the orientation or the position indicated by terms such as "center", "longitudinal", "transverse", "length", "width", "thickness", "over", "below", "front", "rear", "left", "right", "vertical", "horizontal", "top", "bottom", "inner", "outer", "clockwise", and "anticlockwise" should be construed to refer to the orientation and the position as shown in the drawings, and is only for the convenience of describing the present disclosure and simplifying the description, rather than indicating or implying that the pointed device or element must have a specific orientation, or be constructed and operated in a specific orientation, and therefore cannot be understood as a limitation of the present disclosure. In the description of the present disclosure, "plurality" means at least two, unless otherwise specifically defined.

In the description of the present disclosure, it should be noted that, unless otherwise clearly specified and limited, terms such as "install", "connect", and "connect to" should be understood in a broad sense. For example, it may be a fixed connection or a detachable connection or connection as one piece; mechanical connection or electrical connection; direct connection or indirect connection through an intermediate; internal communication of two components or the interaction relationship between two components. For those of ordinary skill in the art, the specific meaning of the above-mentioned terms in the present disclosure can be understood according to specific circumstances.

In the present disclosure, unless expressly stipulated and defined otherwise, the first feature "on" or "under" the second feature may mean that the first feature is in direct contact with the second feature, or the first and second features are in indirect contact through an intermediate. Moreover, the first feature "above" the second feature may mean that the first feature is directly above or obliquely above the second feature, or simply mean that the level of the first feature is higher than that of the second feature. The first feature "below" the second feature may mean that the first feature is directly below or obliquely below the second feature, or simply mean that the level of the first feature is smaller than that of the second feature.

Various embodiments or examples for implementing different structures of the present disclosure are provided below. In order to simplify the description of the present disclosure, components and arrangements of specific examples are described herein. These specific examples are merely for the purpose of illustration, rather than limiting the present disclosure. Further, the same reference numerals and/or reference letters may appear in different examples of the present disclosure for the purpose of simplicity and clarity, instead of indicating a relationship between different embodiments and/or the discussed arrangements. In addition, the present disclosure provides examples of various specific processes and materials. However, applications of other processes and/or the use of other materials are conceivable for those of ordinary skill in the art.

A home energy storage system is a high-capacity, stationary energy storage device that requires professional mounting and wiring modifications. A core function of the home energy storage system is to store surplus photovoltaic electricity or off-peak electricity, aiming to improve energy self-sufficiency, reduce electricity bills, and automatically and seamlessly switch to provide uninterrupted power supply to essential or whole-house loads during a power outage of a grid.

A balcony photovoltaic-storage system is a miniaturized, modular, plug-and-play energy storage device that does not require wiring modifications. A core purpose of the balcony photovoltaic-storage system is to utilize a balcony space for power generation to supply low-power loads and partially reduce electricity bills. Also, the balcony photovoltaic-storage system possesses a portable and mobile attribute (usable outdoors). However, during a power outage of a grid, a grid-connected port of the balcony photovoltaic-storage system will stop supplying power, and consequently, a load located on a branch circuit and connected to the grid-connected port will also experience a power outage. A user has to manually switch a plug of the load to an off-grid port to restore power supply. Thus, the uninterrupted power supply cannot be achieved.

Even if the uninterrupted power supply can also be achieved based on a professional modification on household wiring externally connected to the balcony photovoltaic-storage system, the user cannot arbitrarily alter the modified external connection wiring due to safety considerations after such a wiring modification, thereby losing the critical properties of portability and mobility of the balcony photovoltaic-storage system. That is, the user could no longer unplug a corresponding cable and take the balcony photovoltaic-storage system outdoors for use. Therefore, the related art lacks a solution for uninterruptedly providing a core load with power supply while maintaining the properties of portability and mobility of the balcony photovoltaic-storage system.

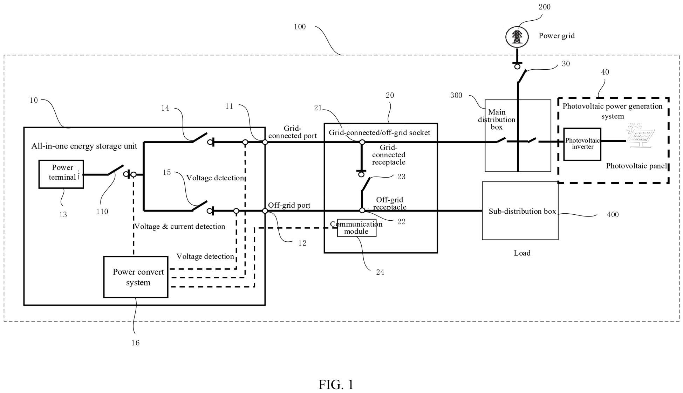

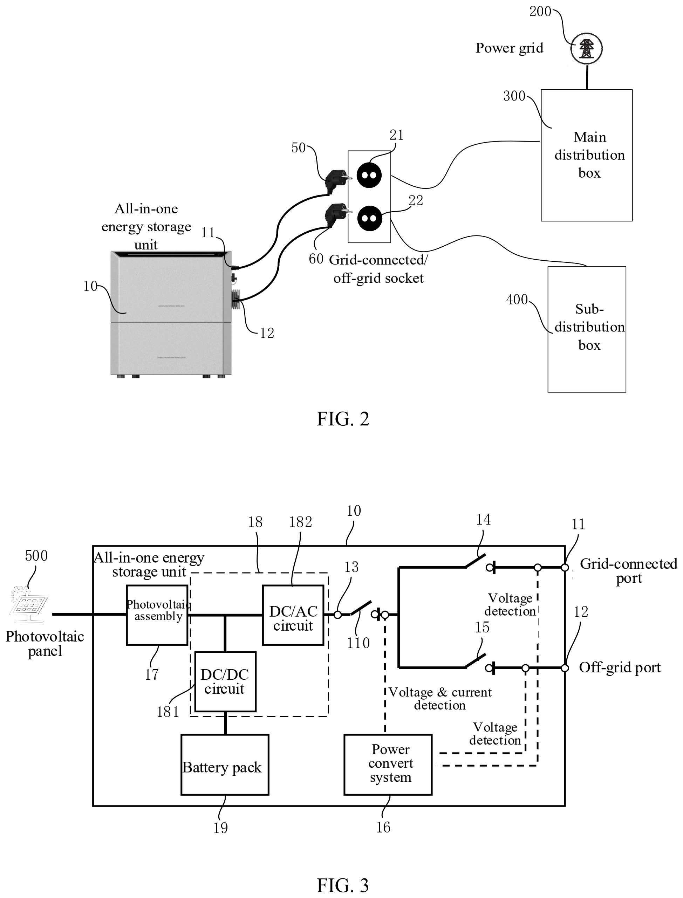

Referring to FIG. 1 and FIG. 2, an energy storage power supply system 100 according to embodiments of the present disclosure includes an all-in-one energy storage unit 10 and a grid-connected/off-grid socket 20. The all-in-one energy storage unit 10 has a grid-connected port 11 and an off-grid port 12. The grid-connected/off-grid socket 20 includes a grid-connected receptacle 21, an off-grid receptacle 22, and a bypass switch 23. The grid-connected receptacle 21 is connected to the grid-connected port 11 of the all-in-one energy storage unit 10 through a first pluggable connector 50. The grid-connected receptacle 21 is configured to electrically connect to a main distribution box 300 at a grid 200 side. The off-grid receptacle 22 is connected to the off-grid port 12 of the all-in-one energy storage unit 10 through a second pluggable connector 60. The off-grid receptacle 22 is configured to electrically connect to a sub-distribution box 400 at a core load side. The bypass switch 23 is connected between the grid-connected receptacle 21 and the off-grid receptacle 22. The bypass switch 23 is configured to be switched on in a grid-connected operation mode of the all-in-one energy storage unit 10, enabling electrical energy provided by the grid 200 to be supplied to the sub-distribution box 400 through the main distribution box 300 and the bypass switch 23, and/or enabling electrical energy provided by the all-in-one energy storage unit 10 to be supplied to the sub-distribution box 400 through the grid-connected port 11, the first pluggable connector 50, the grid-connected receptacle, the bypass switch 23, and the off-grid receptacle 22. The bypass switch 23 is further configured to be switched off in response to a detection of a power outage of the grid 200 and switching of the all-in-one energy storage unit 10 to an off-grid operation mode, enabling the electrical energy provided by the all-in-one energy storage unit 10 to be supplied to the sub-distribution box 400 through the off-grid port 12, the second pluggable connector 60 and the off-grid plug, and keeping continuous power supply to the sub-distribution box 400 during the switching. The first pluggable connector 50 and the second pluggable connector 60 can be unplugged from the grid-connected/off-grid socket 20, to separate the all-in-one energy storage unit 10 from the grid-connected/off-grid socket 20.

The energy storage power supply system 100 of the present disclosure, on one hand, achieves cooperative power supply of the grid 200 and the all-in-one energy storage unit 10 during a grid-connected operation and a smooth transition to isolation of the grid 200 and independent power supply by the all-in-one energy storage unit 10 during an off-grid operation, through a configuration of the bypass switch 23, ensuring flexibility and reliability of the energy storage power supply system 100. On the other hand, through the grid-connected/off-grid socket 20 and the pluggable connector, the all-in-one energy storage unit 10 can be in a pluggable connection with the distribution box. In this way, a "plug-and-play" capability is achieved while guaranteeing the original grid-connected/off-grid function, which facilitates mounting, maintenance, and replacement, and it is convenient for the user to move the all-in-one energy storage unit 10 to other occasions requiring power usage, thereby meeting more user demands.

Specifically, referring to FIG. 1 to FIG. 4, the grid-connected operation mode refers to that the energy storage power supply system 100 is directly connected to the public grid 200 (a national or regional power transmission network) and operates; and the off-grid operation mode refers to that the energy storage power supply system 100 is completely disconnected from the public grid 200 and independently operates.

In an embodiment of the present disclosure, the all-in-one energy storage unit 10 has the grid-connected port 11 and the off-grid port 12, which are connected to corresponding receptacles of the grid-connected/off-grid socket 20 through the first pluggable connector 50 and the second pluggable connector 60, respectively. The grid-connected receptacle 21 is directly connected to the main distribution box 300 at the grid 200 side, while the off-grid receptacle 22 is connected to the sub-distribution box 400 at the core load side. The bypass switch 23 is disposed between the grid-connected receptacle 21 and the off-grid receptacle 22 to form a critical energy path.

When the system is in the grid-connected operation mode, the bypass switch 23 remains switched on. In this case, the electrical energy from the grid 200 can be directly supplied to a load end via a path of the main distribution box 300-the bypass switch 23-the sub-distribution box 400; the all-in-one energy storage unit 10 can also supply power to the load end via a path of the grid-connected port 11-the first pluggable connector 50-the grid-connected receptacle 21-the bypass switch 23-the off-grid receptacle 22-the sub-distribution box 400, achieving the joint power supply by the grid 200 and the all-in-one energy storage unit 10. In response to the detection of the power outage of the grid 200, the all-in-one energy storage unit 10 is switched to the off-grid operation mode, and the bypass switch 23 is immediately switched off to cut off the path to the grid 200. In this case, the electrical energy from the all-in-one energy storage unit 10 is supplied to the load end by flowing in a path of the off-grid port 12-the second pluggable connector 60-the off-grid receptacle 22 to the sub-distribution box 400.

In an embodiment of the present disclosure, referring to FIG. 2, the first pluggable connector 50 and the second pluggable connector 60 are each detachably connected to the grid-connected/off-grid socket 20. The user can manually unplug the first pluggable connector 50 and the second pluggable connector 60 to disconnect and separate the all-in-one energy storage unit 10 from the grid-connected/off-grid socket 20, facilitating device maintenance or emergency relocation.

Referring to FIG. 1 and FIG. 3, in some embodiments, the all-in-one energy storage unit 10 further includes a power terminal 13, a first switch 14, a second switch 15, and a power convert system 16. The power terminal 13 is connected to the grid-connected port 11 through the first switch 14. The power terminal 13 is connected to the off-grid port 12 through the second switch 15. The power convert system 16 is configured to: detect a voltage of the grid 200 at the grid-connected port 11; control, when the voltage of the grid 200 is greater than a predetermined voltage, the first switch 14 to be switched on and the second switch 15 to be switched off, to connect the power terminal 13 to the grid-connected port 11; and control, when the voltage of the grid 200 is smaller than or equal to the predetermined voltage, the second switch 15 to be switched on and the first switch 14 to be switched off, to connect the power terminal 13 to the off-grid port 12.

In this way, the power convert system 16 can detect the voltage of the grid 200 in real time and automatically switch the first switch 14 or the second switch 15, thereby achieving intelligent switching between the grid-connected operation mode and the off-grid operation mode and ensuring continuity and response speed of power supply to the core load when the grid 200 is abnormal.

Specifically, the power convert system 16, as one of the core devices in the all-in-one energy storage unit 10, undertakes the key tasks of bidirectional energy conversion and control. A primary function of the power convert system 16 is to establish an efficient, flexible, and safe "bridge" between an energy storage battery (direct current) and the grid 200 or the load (alternating current), achieving charge/discharge management of electrical energy and operation mode switching.

In an embodiment of the present disclosure, the power convert system 16, as a control center, is configured to continuously monitor a voltage at the grid-connected port 11. When the voltage of the grid 200 is detected to be greater than the predetermined voltage, the power convert system 16 switches on the first switch 14 and switches off the second switch 15, enabling electrical energy from the power terminal 13 to be directionally delivered to the grid-connected port 11. When the voltage of the grid 200 is smaller than or equal to the predetermined voltage, the power convert system 16 immediately switches off the first switch 14 and switches on the second switch 15, thereby switching an energy path to the off-grid port 12.

It should be understood that, the predetermined voltage can be dynamically adjusted based on a quality of the local grid 200, and a hysteresis comparator circuit is used to avoid frequent switching. For example, if the voltage of the grid 200 is 230 V, the first switch 14 can be controlled to be switched on and the second switch 15 can be controlled to be switched off when the voltage reaches 207 V, achieving a grid connection.

In an embodiment of the present disclosure, the power terminal 13 serves as a main energy outlet, which is, after passing through the main switch 110, split into two paths, one of which is connected to the grid-connected port 11 through the first switch 14, and the other one of which is connected to the off-grid port 12 through the second switch 15.

In an embodiment of the present disclosure, the all-in-one energy storage unit 10 further includes a photovoltaic module 17, a control circuit 18, and a battery pack 19. The control circuit 18 includes a DC/DC circuit 181 and a DC/AC circuit 182. The photovoltaic module 17 is connected to and mounted at an external photovoltaic panel 500. The battery pack 19 is connected to the DC/DC circuit 181. Both the photovoltaic module 17 and the DC/DC circuit 181 are connected to the DC/AC circuit 182, and are connected to the first switch 14 and the second switch 15 through the DC/AC circuit 182.

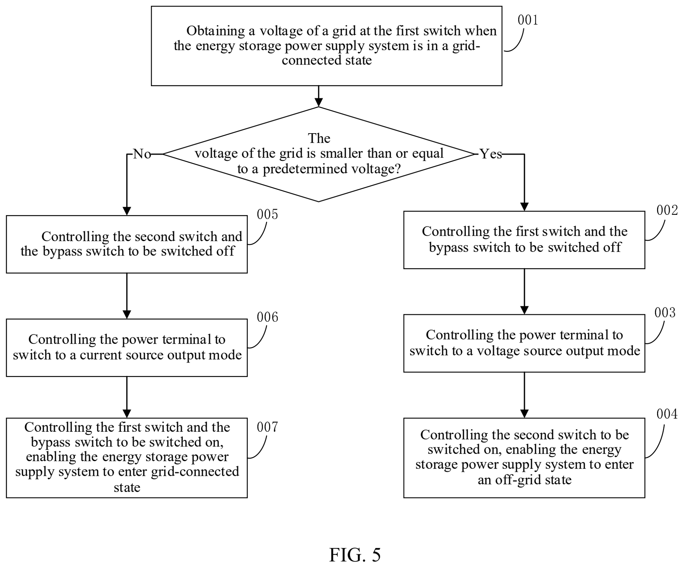

Referring to FIG. 5, an embodiment of the present disclosure further provides a method for controlling the energy storage power supply system 100. It should be noted that the steps shown may be executed in a logical order different from that illustrated in the flowchart of the method. The method may include operations at blocks.

At block 001, a voltage of a grid at the first switch is obtained when the energy storage power supply system is in a grid-connected state.

At block 002, the first switch and the bypass switch are controlled to be switched off when the grid voltage is smaller than or equal to a predetermined voltage.

At block 003, the power terminal is controlled to be switched to a voltage source output mode.

At block 004, the second switch is controlled to be switched on, enabling the energy storage power supply system to enter an off-grid state.

For example, the power convert system 16 can continuously compare the voltage of the grid 200 at the grid-connected port 11 with the predetermined voltage. When the voltage of the grid 200 is smaller than or equal to the predetermined voltage and the voltage of the grid 200 being smaller than or equal to the predetermined voltage lasts for more than 100 ms, it is determined that the grid 200 has failed or experiences a power outage, and thus, the first switch 14 is immediately switched off, the power terminal 13 is controlled to switch to the voltage source output mode, and the second switch 15 is switched on to achieve seamless switching.

The voltage source output mode refers to that an output terminal of the power supply is forced to maintain a constant voltage (or change in accordance with a predetermined curve) and that the output current of the power supply is determined by a load impedance. Before switching to the off-grid state, the power terminal must be controlled to be in the voltage source output mode to ensure stability of system voltage and frequency, avoiding device damage or system collapse caused by sudden load changes.

Further, referring to FIG. 5, in some embodiments, the method further includes operations at blocks.

At block 001, the voltage of the grid at the first switch is obtained when the energy storage power supply system is in the off-grid state.

At block 005, the second switch and the bypass switch are controlled to be switched off when the voltage of the grid is greater than the predetermined voltage.

At block 006, the power terminal is controlled to be switched to a current source output mode.

At block 007, the first switch and the bypass switch are controlled to be switched on, enabling the energy storage power supply system to enter the grid-connected state.

For example, in the off-grid state, the power convert system 16 continuously monitors the voltage at the grid-connected port 11. When the voltage is recovered to a level greater than the predetermined voltage and remains stable for more than 500 ms, the switching is initiated: the second switch 15 is switched off to cut off an off-grid path, the power terminal 13 is switched to a current source mode, the first switch 14 is controlled to be switched on, and the bypass switch 23 is switched on.

The current source output mode refers to that the output terminal of the power supply is forced to maintain a constant current (or change in accordance with a predetermined curve) and the output voltage of the power supply is determined by the load impedance. When the energy storage system is switched to the grid-connected state, the output mode needs to be changed from the voltage source to the current source. The core purpose is to ensure safe startup and stable establishment of parameters of the grid 200. In an embodiment of the present disclosure, when the energy storage power supply system 100 is grid-connected, since the grid 200 operates in the voltage source output mode, only one voltage source can exist in one power supply network at the same time; otherwise, conflicts occur. Therefore, to coordinate with the grid 200, the energy storage power supply system 100 is required to be adjusted to operate in the current source output mode.

Referring to FIG. 1 and FIG. 3, in some embodiments, the power convert system 16 is in a communication connection with the bypass switch 23, and is configured to: control the bypass switch 23 to be switched on when the first switch 14 is switched on; and control the bypass switch 23 to be switched off when the second switch 15 is switched on.

In this way, through cooperative control between the power convert system 16 and the bypass switch 23, automatic matching between a bypass state and the operation mode is achieved, avoiding a risk of electrical energy backflow in the off-grid operation mode.

In an embodiment of the present disclosure, the grid-connected/off-grid socket 20 further includes a communication module 24. The power convert system 16 is capable of communicating with the bypass switch 23 through the communication module 24. For example, the power convert system 16 may establish a real-time communication link with the bypass switch 23 through an RS485/CAN bus or a Bluetooth connection.

Specifically, when the first switch 14 is switched on (the grid-connected operation mode), the power convert system 16 transmits a switching-on instruction to the bypass switch 23, in which case the bypass switch 23 is turned on, thereby establishing an unobstructed grid 200-load path. When the second switch 15 is switched on (the off-grid operation mode), the power convert system 16 transmits a switching-off instruction, and thus the bypass switch 23 is switched off, thereby physically isolating the grid 200 from a load connection point.

Referring to FIG. 1 and FIG. 3, in some embodiments, the energy storage power supply system 100 includes a CT switch and a photovoltaic power generation system 40. The photovoltaic power generation system 40 is connected to the main distribution box 300. The main distribution box 300 is connected to the grid 200 through the CT switch. The power convert system 16 is in a communication connection with the bypass switch 23. The power convert system 16 is configured to: control, when the first switch 14 is switched on, each of the CT switch and the bypass switch 23 to be switched on; and control, when the second switch 15 is switched on, the CT switch to be switched off and the bypass switch 23 to be switched on.

As the power convert system 16 can synchronously control both the CT switch and the bypass switch 23 to be switched on during the grid-connected operation and can also control the CT switch to be switched off while keeping the bypass switch 23 switched on during the off-grid operation, an intelligent isolation between the photovoltaic power generation system 40 and the grid 200 is achieved, which helps ensure system safety and compliance during the off-grid operation.

In some embodiments, the energy storage power supply system 100 may also include the photovoltaic power generation system 40. The photovoltaic power generation system 40 is connected to an input terminal of the main distribution box 300. The main distribution box 300 is connected in series to the grid 200 through the CT switch. The power convert system 16 is configured to simultaneously control the bypass switch 23 and the CT switch.

Specifically, when the energy storage power supply system 100 is in the grid-connected operation mode (the first switch 14 is switched on), the power convert system 16 synchronously switches on the bypass switch 23 and the CT switch, allowing electrical energy from the photovoltaic power generation system 40 to be supplied to the grid 200 or the local load. When the energy storage power supply system 100 is in the off-grid operation mode (the second switch 15 is switched on), the power convert system 16 first switches off the CT switch for a physical disconnection, and then switches on the bypass switch 23, enabling the photovoltaic power generation system 40 to continue supplying power to the sub-distribution box 400 through the main distribution box 300, the bypass switch 23, the off-grid receptacle 22. The all-in-one energy storage unit 10 and the photovoltaic power generation system 40 can supply power to the load of the sub-distribution box 400 together, improving a power supply capacity in the off-grid state. Specifically, a power supply amount and power supply power in the off-grid state can be increased, providing the user with a better backup power experience during power outages and the off-grid operation.

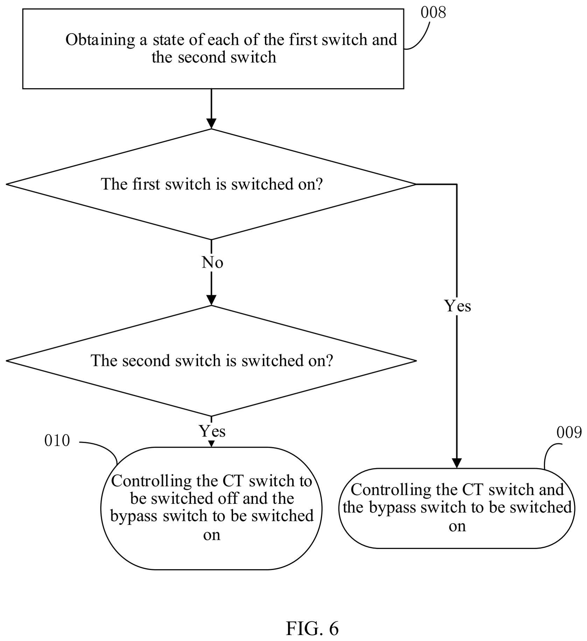

Referring to FIG. 6, in some embodiments, to complete the above operations, the method further includes operations at blocks.

At block 008, a state of each of the first switch and the second switch is obtained.

At block 009, when the first switch is switched on, the CT switch and the bypass switch are controlled to be switched on.

At block 010, when the second switch is switched on, the CT switch is controlled to be switched off and the bypass switch is controlled to be switched on.

In this way, by synchronously controlling the CT switch and the bypass switch 23 based on the state of the switch, automatic coordination of a connection state of the photovoltaic system with the grid 200 during mode transitions is achieved, ensuring system compliance and safety.

For example, when detecting that the first switch 14 is switched on (the grid-connected operation mode), the power convert system 16 transmits the switching-on instruction to a controller of the CT switch, causing the CT switch to be switched on to connect the photovoltaic power generation system 40 to the grid 200, while the bypass switch 23 is switched on to establish a local power supply path. When the second switch 15 is switched on (the off-grid operation mode), the switching-off instruction is transmitted to the CT switch, and after state feedback of the CT switch confirms a switching-off position, the bypass switch 23 is switched on to form an off-grid micro grid 200.

Referring to FIG. 1 and FIG. 3, in some embodiments, the energy storage power supply system 100 includes a CT switch and a photovoltaic power generation system 40. The photovoltaic power generation system 40 is connected to the main distribution box 300. The main distribution box 300 is connected to the grid 200 through the CT switch. The bypass switch 23 and the CT switch are in a communication connection with a remote user terminal. When the second switch 15 is switched on, the remote user terminal controls the bypass switch 23 and the CT switch, to switch off the CT switch and switch on the bypass switch 23.

In this way, as the remote user terminal directly controls the CT switch to be switched off and the bypass switch 23 to be switched on, it is convenient to perform a manual intervention in managing a connection state of the grid 200 in the off-grid operation mode of the all-in-one energy storage unit 10, enhancing operational flexibility and emergency response capability of the system.

In some embodiments, a remote control dimension may also be expanded for the energy storage power supply system 100 to enhance the operational flexibility.

For example, each of the bypass switch 23 and the CT switch may be equipped with a Wi-Fi/5G communication module 24 to establish a connection with the remote user terminal. When the power convert system 16 switches to the off-grid operation mode (the second switch 15 closes), a state alarm is automatically transmitted to the user terminal. The user can manually trigger an "off-grid operation instruction". A switching-off instruction may be transmitted by the remote user terminal to the CT switch and a switching-on instruction may be transmitted by the remote user terminal to the bypass switch 23 via an MQTT protocol.

In some embodiments, an instruction transmission delay should be less than 500 ms, and an execution state should be fed back to a terminal interface in real time.

In some embodiments, the remote user terminal includes, but is not limited to, a mobile phone, a computer, an App, a cloud platform, etc.

Referring to FIG. 1 and FIG. 3, in some embodiments, the power convert system 16 is in a communication connection with the bypass switch 23, and the power convert system 16 is configured to: detect a current-voltage signal at the power terminal 13; and control the bypass switch 23 to be switched on when the current and voltage signal is abnormal.

In this way, by enabling the power convert system 16 to monitor abnormal signals at the power terminal 13 and forcibly close the bypass switch 23, rapid power supply switching under fault conditions is achieved, which benefits power supply safety for the core load and device protection.

In some embodiments, the communication connection of the power convert system 16 with the bypass switch 23 enables abnormality protection for the power terminal 13.

For example, the power convert system 16 collects a voltage waveform and a current waveform at the power terminal 13 in real time at a sampling frequency of 20 kHz, analyzes a harmonic distortion rate through FFT (e.g., THD>8% is determined as abnormal), obtains an effective value through an RMS calculation (e.g., overvoltage at 130% of a threshold/undervoltage at 70% of a threshold), and detects three-phase imbalance through a dq transformation (e.g., protection is triggered if the three-phase imbalance degree>10%). When any parameter exceeds its threshold, the converter immediately transmits a forced switching-on instruction to the bypass switch 23. In this case, regardless of the mode of the system, the bypass switch 23 is turned on, allowing the electrical energy from the grid 200 to directly take over load power supply.

Further, in some embodiments, if an abnormality at the power terminal 13 is a transient fault (e.g., duration<200 ms), the bypass is automatically released after the parameter returns to normal; if the abnormality at the power terminal 13 is a permanent fault, a state of the bypass is maintained and a fault code is reported.

In some embodiments, the all-in-one energy storage unit 10 includes a photovoltaic module 17 and a battery pack 19. Each of the photovoltaic module 17 and the battery pack 19 is connected to the power terminal 13 through a control circuit 18. The power convert system 16 is configured to: control, when the first switch 14 is switched on, the control circuit 18 to control the photovoltaic module 17 and/or the battery pack 19 to supply power through the power terminal 13 at a constant current; and control, when the second switch 15 is switched on, the control circuit 18 to control the photovoltaic module 17 and/or the battery pack 19 to supply power through the power terminal 13 at a constant voltage.

In this way, by controlling the photovoltaic panel/battery pack 19 to supply power in the constant current (grid-connected) or the constant voltage (off-grid) manner under different modes, dynamic matching between energy output characteristics and load demands is achieved, which is conducive to improving an energy utilization efficiency and extending a device lifespan.

Specifically, in some embodiments, when the energy storage power supply system 100 is in the grid-connected operation mode, the power convert system 16 controls the DC/DC circuit 181 and the DC/AC circuit 182 to operate in the constant current mode. A current setpoint is adjusted in real time based on a dispatch instruction of the grid 200 or electricity price strategies, enabling photovoltaic/battery output power to precisely match a demand. When the energy storage power supply system 100 is in the off-grid operation mode, the power convert system 16 controls the DC/DC circuit 181 and the DC/AC circuit 182 to switch to the constant voltage mode, achieving load sharing among multiple sources in parallel through droop control.

Referring to FIG. 1 and FIG. 3, in some embodiments, the all-in-one energy storage unit 10 further includes a main switch 110. The power terminal 13 is connected to each of the first switch 14 and the second switch 15 through the main switch 110.

In this way, by using the main switch 110 to uniformly manage a power input of the first switch/second switch 15, overall power-outage maintenance for the all-in-one energy storage unit 10 is facilitated, improving safety and convenience of system maintenance.

In some embodiments, a mechanical interlock device may be disposed at a switching-on/- off position of the main switch 110, to ensure that the first switch and the second switch 15 cannot be switched on during maintenance. The switching-on or -off state is fed back in real time to the converter through auxiliary contacts, forming an "switching-on permission" logical AND gate: only when the main switch 110 is switched on and no fault exists, the first switch/second switch 15 can operate.

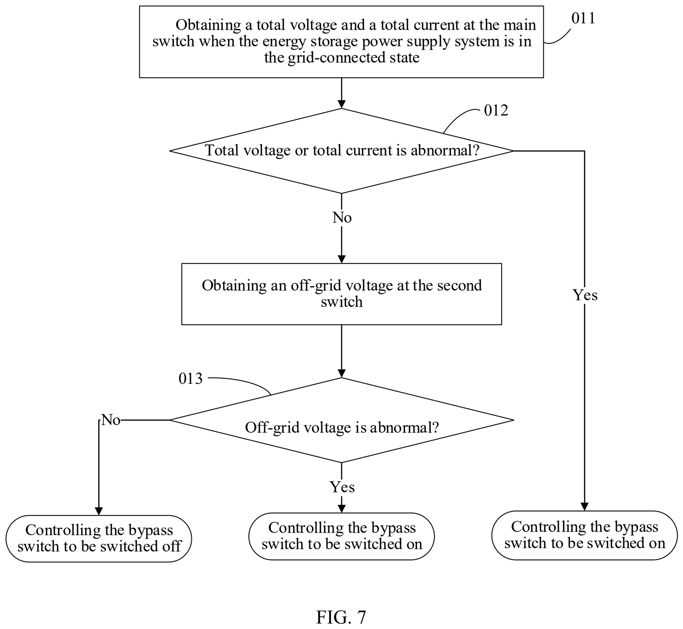

Referring to FIG. 7, in some embodiments, the method further includes operations at blocks.

At block 011, when the energy storage power supply system is in the grid-connected state. a total voltage and a total current at the main switch are obtained.

At block 012, when the total voltage or the total current is abnormal, the bypass switch is controlled to be switched on; or when the total voltage and the total current are normal, an off-grid voltage at the second switch is obtained.

At block 013, when the off-grid voltage is abnormal, the bypass switch is controlled to be switched on; or when the off-grid voltage is normal, the bypass switch is controlled to be switched off.

In this way, through a hierarchical detection of abnormalities in the voltage and the current of the main switch 110 and the off-grid voltage, intelligent interlock control of the bypass switch 23 is achieved, which helps maintain the power supply to the core load in case of a device failure.

For example, in the grid-connected state, the power convert system 16 samples a three-phase voltage and current at the main switch 110 at a frequency of 1 kHz, and calculates parameters including active power, reactive power, and frequency deviation. If any of the parameters exceeds the tolerable deviation, the bypass switch 23 is immediately switched on to transfer the load to the grid 200 for power supply. When the parameters are normal, a harmonic voltage distortion rate at the off-grid port 12 is detected. When the parameters are abnormal, the bypass switch 23 is switched on to establish a backup path.

In some embodiments, each of the first pluggable connector 50 and the second pluggable connector 60 is fixedly connected to the grid-connected/off-grid socket 20 through a snap-fit method or a threaded engagement method.

In this way, by fixing the connector though the snap-fit method or the threaded engagement method, rapid mounting or removal between the grid-connected/off-grid socket 20 and the all-in-one energy storage unit 10 is achieved while complying with relevant regulations, facilitating device movement, replacement, and on-site deployment.

For example, a rotary snap-fit mechanism may be provided between the socket and each of the first pluggable connector 50 and the second pluggable connector 60. That is, after the first pluggable connector 50 and/or the second pluggable connector 60 are inserted into the socket, the rotary snap-fit mechanism is rotated clockwise, to enables contacts to be tightly compressed through a cam, while the rotary snap-fit mechanism is rotated counterclockwise to enable an automatic release.

In some embodiments, the grid-connected receptacle 21 and the off-grid receptacle 22 are respectively connected to the main distribution box 300 and the sub-distribution box 400 through an independent line.

In this way, through the independent line design of the grid-connected receptacle 21 and the off-grid receptacle 22, mutual interference between a grid-connected circuit and an off-grid circuit is avoided, which helps ensure stability and reliability of dual-path power supply.

Specifically, in an embodiment of the present disclosure, the independent lines connecting the grid-connected receptacle 21 and the off-grid receptacle 22 to the main distribution box 300 and the sub-distribution box 400 adopt a fully independent channel architecture. For example, a 6 mm² flame-retardant copper cable (with a gray sheath) is laid from the grid-connected receptacle 21 to the main distribution box 300, routed through a metallic conduit separately; a cable of the same specification (with a yellow sheath) is used from the off-grid receptacle 22 to the sub-distribution box 400, with a minimum spacing of 300 mm between the two cables. A cable shielding layer is grounded at two ends to reduce electromagnetic interference. Independent dual busbars are disposed inside the sub-distribution box 400. A main busbar is connected to the cable from the grid-connected receptacle 21, while a backup busbar is connected to the cable from the off-grid receptacle 22. The main busbar and the backup busbar are selectively energized through a mechanically interlocked switch. Such a design ensures that even under extreme conditions such as cable damage and short circuits, the grid-connected circuit and the off-grid circuit remain completely isolated, eliminating a risk of fault propagation.

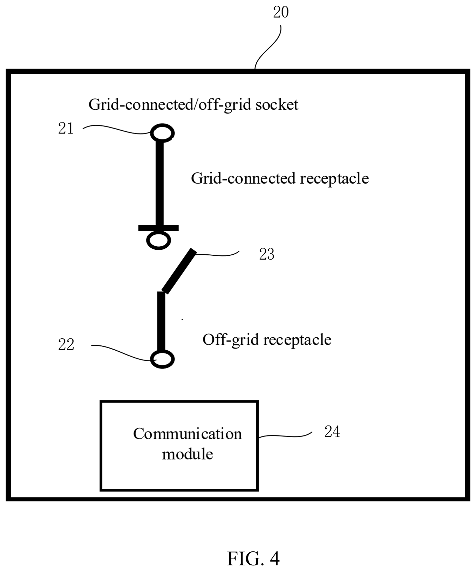

Referring to FIG. 1 and FIG. 4, in another embodiment of the present disclosure, a grid-connected/off-grid socket 20 is further provided. A structure of the grid-connected/off-grid socket 20 has already been described in detail in the energy storage power supply system 100, which is not elaborated herein.

The present disclosure further provides a computer-readable storage medium for storing a computer program. The computer-readable storage medium can be applied in a computer device. The computer program enables the computer device to perform corresponding procedures in the method for controlling the energy storage power supply system according to an embodiment of the present disclosure, which is not elaborated herein for simplicity.

The present disclosure further provides a computer program product, which includes computer instructions stored on a computer-readable storage medium. A processor of the computer device is configured to read the computer instructions from the computer-readable storage medium, and execute the computer instructions, enabling the computer device to perform corresponding procedures in the method for controlling the energy storage power supply system according to an embodiment of the present disclosure, which is not elaborated herein for simplicity.

The present disclosure further provides a computer program, which includes computer instructions stored on a computer-readable storage medium. A processor of the computer device is configured to read the computer instructions from the computer-readable storage medium, and execute the computer instructions, enabling the computer device to perform corresponding procedures in the method for controlling the energy storage power supply system of the present disclosure, which is not elaborated herein for simplicity.

It should be understood that the processor of the present disclosure may be an integrated circuit chip having signal processing capabilities. In an implementation, actions of the above method embodiments may be accomplished by an integrated logic circuit in hardware in the processor or by instructions in the form of software. The above processor may be a general-purpose processor, a Digital Signal Processor (DSP), an Application Specific Integrated Circuit (ASIC), a Field-Programmable Gate Array (FPGA) or other programmable logic devices, a discrete gate or a transistor logic device, and a discrete hardware component. The method, actions, and logic block diagrams according to any of the embodiments of the present disclosure may be implemented or performed. The general-purpose processor may be a microprocessor, or the processor may further be any conventional processor, etc. The actions of the method disclosed in combination with any of the embodiments of the present disclosure may be directly embodied as performed by a hardware decoding processor or performed by a combination of a hardware module and a software module in a decoding processor. The software module may be located in a random memory, a flash memory, a read-only memory, a programmable read-only memory or an electrically erasable programmable memory, a register, and other storage media mature in the art. The storage medium is located in the memory. The processor reads information in the memory and completes the actions of the above method in combination with the hardware.

It can be appreciated that the memory in the embodiments of the present disclosure may be a transitory memory or a non-transitory memory, or may include both transitory and non-transitory memories. Here, the non-transitory memory may be a Read-Only Memory (ROM), a Programmable ROM (PROM), an Erasable PROM (EPROM), an Electrically EPROM (EEPROM), or a flash memory. The transitory memory may be a Random Access Memory (RAM), which is used as an external cache. As illustrative, rather than limiting, many forms of RAMs are available, including for example Static RAM (SRAM), Dynamic RAM (DRAM), Synchronous DRAM (SDRAM), Double Data Rate SDRAM (DDR SDRAM), Enhanced SDRAM (ESDRAM), Synchlink DRAM (SLDRAM) ), and Direct Rambus RAM (DR RAM). It should be noted that the memory used for the system and method described in the present disclosure is intended to include, but not limited to, these and any other suitable types of memories.

It can be appreciated by those skilled in the art that units and algorithm steps in the embodiments described in connection with the embodiments disclosed herein can be implemented in electronic hardware or any combination of computer software and electronic hardware. Whether these functions are executed by hardware or software depends on specific applications and design constraint conditions of the technical solutions. Those skilled in the art may use different methods for each specific application to implement the described functions, and such implementation is to be encompassed by the scope of this disclosure.

Those skilled in the art can clearly understand that, for the convenience and conciseness of the description, for the specific operation processes of the systems, devices, and units described above, reference can be made to the corresponding processes in the foregoing method embodiments, which are not elaborated herein for simplicity.

In the embodiments of the present disclosure, the term "module" or "unit" refers to a computer program or a part of a computer program having a predetermined function, which works together with other relevant parts to achieve a predetermined objective, and can be implemented entirely or partially using software, hardware (such as processing circuitry or memory), or a combination thereof. Similarly, one processor (or a plurality of processors or memories) can be used to implement one or more modules or units. Further, each module or unit may be a part of an integral module or unit containing the function of that module or unit.

In the embodiments of the present disclosure, it can be appreciated that the disclosed systems, devices, and methods may be implemented in other ways. For example, the device embodiments described above are illustrative only. For example, the divisions of the units are only divisions based on logical functions, and there may be other divisions in actual implementations. For example, more than one unit or component may be combined or integrated into another system, or some features can be ignored or omitted. In addition, the mutual coupling or direct coupling or communicative connection as shown or discussed may be indirect coupling or communicative connection between devices or units via some interfaces which may be electrical, mechanical, or in any other forms.

The units described as separate components may or may not be physically separated, and the components shown as units may or may not be physical units, that is, they may be co-located or distributed across a number of network elements. Some or all of the units may be selected according to actual needs to achieve the objects of the solutions of the embodiments.

In addition, the functional units in the present disclosure may be integrated into one processing unit, or alternatively be separate physical modules, or two or more units may be integrated into one unit.

When the function is implemented in the form of a software functional unit and sold or used as a standalone product, it can be stored in a computer-readable storage medium. Based on this understanding, all or part of the technical solutions according to the present disclosure, or the part thereof that contributes to the prior art, can be embodied in the form of a software product. The computer software product may be stored in a storage medium and contain instructions to enable a computer device, such as a personal computer and a server, to perform all or part of the steps of the method described in each of the embodiments of the present disclosure. The storage medium may include various mediums capable of storing program codes, such as a Universal Serial Bus flash drive, a mobile hard disk, an ROM, an RAM, a magnetic disk, or an optical disc.

Reference throughout this specification to "certain embodiments", "an embodiment", "some embodiments", "illustrative embodiments", "an example", "a specific example", or "some examples" means that a particular feature, structure, material, or characteristic described in connection with the embodiment or example is included in at least one embodiment or example of the present disclosure. The appearances of the above phrases in various places throughout this specification are not necessarily referring to the same embodiment or example. Further, the particular features, structures, materials, or characteristics may be combined in any suitable manner in one or more embodiments or examples.

In addition, terms "first" and "second" are only used for descriptive purposes, and cannot be understood as indicating or implying relative importance or implicitly indicating the number of indicated technical features. Therefore, the features associated with "first" and "second" may explicitly or implicitly include at least one of the features. In the description of the present disclosure, "plurality" means at least two, unless otherwise specifically defined.

Although the embodiments of the present disclosure have been shown and described above, it should be understood that the above-mentioned embodiments are exemplary and should not be construed as limiting the present disclosure. Those skilled in the art can make changes, modifications, substitutions, and alternations to the above-mentioned embodiments within the scope of the present disclosure. The scope of the present disclosure shall be defined by the claims as appended and their equivalents.

## Claims

1. An energy storage power supply system (100), comprising:
an all-in-one energy storage unit (10) having a grid-connected port (11) and an off-grid port (12); and
a grid-connected/off-grid socket (20) comprising:
- a grid-connected receptacle (21) connected to the grid-connected port of the all-in-one energy storage unit through a first pluggable connector, the grid-connected receptacle being configured to electrically connect to a main distribution box at a grid side;
- an off-grid receptacle (22) connected to the off-grid port of the all-in-one energy storage unit through a second pluggable connector, the off-grid receptacle being configured to electrically connect to a sub-distribution box at a core load side; and
- a bypass switch (23) connected between the grid-connected receptacle and the off-grid receptacle, wherein:
the bypass switch is configured to be switched on in a grid-connected operation mode of the all-in-one energy storage unit, enabling electrical energy provided by a grid (200) to be supplied to the sub-distribution box through the main distribution box and the bypass switch, and/or enabling electrical energy provided by the all-in-one energy storage unit to be supplied to the sub-distribution box through the grid-connected port, the first pluggable connector, the grid-connected receptacle, the bypass switch, and the off-grid receptacle;
the bypass switch is further configured to be switched off in response to a detection of a power outage of the grid and switching of the all-in-one energy storage unit to an off-grid operation mode, enabling the electrical energy provided by the all-in-one energy storage unit to be supplied to the sub-distribution box through the off-grid port, the second pluggable connector and the off-grid plug, and keeping continuous power supply to the sub-distribution box during the switching; and
the first pluggable connector and the second pluggable connector are capable of being unplugged from the grid-connected/off-grid socket, to separate the all-in-one energy storage unit from the grid-connected/off-grid socket.

2. The energy storage power supply system according to claim 1, wherein the all-in-one energy storage unit further comprises:
a first switch (14);
a second switch (15);
a power terminal (13) connected to the grid-connected port through the first switch and connected to the off-grid port through the second switch; and
a power convert system (16) configured to:
detect a voltage of the grid at the grid-connected port; and
control, when the voltage of the grid is greater than a predetermined voltage, the first switch to be switched on and the second switch to be switched off, to connect the power terminal to the grid-connected port; and control, when the voltage of the grid is smaller than or equal to the predetermined voltage, the second switch to be switched on and the first switch to be switched off, to connect the power terminal to the off-grid port.

3. The energy storage power supply system according to claim 2, wherein:
the power convert system is in a communication connection with the bypass switch; and
the power convert system is configured to: control the bypass switch to be switched on when the first switch is switched on; and control the bypass switch to be switched off when the second switch is switched on.

4. The energy storage power supply system according to claim 2, further comprising:
a CT switch; and
a photovoltaic power generation system (40) connected to the main distribution box, wherein:
the main distribution box is connected to the grid through the CT switch;
the power convert system is in a communication connection with the bypass switch; and
the power convert system is configured to: control, when the first switch is switched on, each of the CT switch and the bypass switch to be switched on; and control, when the second switch is switched on, the CT switch to be switched off and the bypass switch to be switched on.

5. The energy storage power supply system according to claim 2, further comprising:
a CT switch; and
a photovoltaic power generation system (40) connected to the main distribution box, wherein:
the main distribution box is connected to the grid through the CT switch;
the bypass switch and the CT switch are in a communication connection with a remote user terminal; and
the bypass switch and the CT switch are controlled by the remote user terminal when the second switch is switched on, enabling the CT switch to be switched off and the bypass switch to be switched on.

6. The energy storage power supply system according to any one of the preceding claims when referring back to claim 2, wherein:
the power convert system is in a communication connection with the bypass switch; and
the power convert system is configured to: detect a current-voltage signal at the power terminal; and control the bypass switch to be switched on when the current-voltage signal is abnormal.

7. The energy storage power supply system according to any one of the preceding claims when referring back to claim 2, wherein the all-in-one energy storage unit comprises a photovoltaic module and a battery pack, wherein:
the photovoltaic module and the battery pack are connected to the power terminal through a control circuit; and
the power convert system is configured to:
control, when the first switch is switched on, the control circuit to control the photovoltaic module and/or the battery pack to supply power at a constant current through the power terminal; and
control, when the second switch is switched on, the control circuit to control the photovoltaic module and/or the battery pack to supply power at a constant voltage through the power terminal.

8. The energy storage power supply system according to any one of the preceding claims when referring back to claim 2, wherein the all-in-one energy storage unit further comprises a main switch (110), the power terminal being connected to each of the first switch and the second switch through the main switch.

9. The energy storage power supply system according to any one of the preceding claims, wherein each of the first pluggable connector and the second pluggable connector is fixedly connected to the grid-connected/off-grid socket through a snap-fit or a threaded engagement.

10. The energy storage power supply system according to any one of the preceding claims when referring back to, wherein the grid-connected receptacle and the off-grid receptacle are respectively connected to the main distribution box and the sub-distribution box through independent lines.

11. A method for controlling an energy storage power supply system, the method being applied in a power convert system of the energy storage power supply system, wherein the energy storage power supply system comprises:
an all-in-one energy storage unit comprising a grid-connected port, an off-grid port, a power terminal, a main switch, a first switch, and a second switch, wherein the power terminal is connected to each of the first switch and the second switch through the main switch, wherein the first switch is connected to the grid-connected port, and wherein the second switch is connected to the off-grid port;
a grid-connected/off-grid socket comprising: a grid-connected receptacle connected to the grid-connected port of the all-in-one energy storage unit through a first pluggable connector, the grid-connected receptacle being configured to electrically connect to a main distribution box at a grid side; and an off-grid receptacle connected to the off-grid port of the all-in-one energy storage unit through a second pluggable connector, the off-grid receptacle being configured to electrically connect to a sub-distribution box at a core load side; and
a bypass switch connected between the grid-connected receptacle and the off-grid receptacle, the first pluggable connector and the second pluggable connector being configured to allow a user to separate the all-in-one energy storage unit from the grid-connected/off-grid socket,
wherein the method comprises:
obtaining a voltage of a grid at the first switch when the energy storage power supply system is in a grid-connected state;
controlling the first switch and the bypass switch to be switched off when the grid voltage is smaller than or equal to a predetermined voltage;
controlling the power terminal to be switched to a voltage source output mode; and
controlling the second switch to be switched on, enabling the energy storage power supply system to enter an off-grid state.

12. The method according to claim 11, further comprising:
obtaining the voltage of the grid at the first switch when the energy storage power supply system is in the off-grid state;
controlling the second switch and the bypass switch to be switched off when the voltage of the grid is greater than the predetermined voltage;
controlling the power terminal to be switched to a current source output mode; and
controlling the first switch and the bypass switch to be switched on, enabling the energy storage power supply system to enter the grid-connected state.

13. The method according to claim 12, wherein the energy storage power supply system further comprises a CT switch and a photovoltaic power generation system, the photovoltaic power generation system being connected to the main distribution box, and the main distribution box being connected to a grid through the CT switch, and
wherein the method further comprises:
obtaining a state of each of the first switch and the second switch;
controlling, when the first switch is switched on, the CT switch and the bypass switch to be switched on; and
controlling, when the second switch is switched on, the CT switch to be switched off and the bypass switch to be switched on.

14. The method according to claim 11, wherein the all-in-one energy storage unit further comprises the main switch, the power terminal being connected to each of the first switch and the second switch through the main switch, and
wherein the method further comprises:
obtaining a total voltage and a total current at the main switch when the energy storage power supply system is in the grid-connected state;
controlling the bypass switch to be switched on when the total voltage or the total current is abnormal, or obtaining an off-grid voltage at the second switch when the total voltage and the total current are normal; and
controlling the bypass switch to be switched on when the off-grid voltage is abnormal, or controlling the bypass switch to be switched off when the off-grid voltage is normal.

15. Agrid-connected/off-grid socket, applied in an energy storage power supply system comprising an all-in-one energy storage unit, the all-in-one energy storage unit having a grid-connected port and an off-grid port, the grid-connected/off-grid socket comprising:
a grid-connected receptacle connected to the grid-connected port of the all-in-one energy storage unit through a first pluggable connector, the grid-connected receptacle being configured to electrically connect to a main distribution box at a grid side;
an off-grid receptacle connected to the off-grid port of the all-in-one energy storage unit through a second pluggable connector, the off-grid receptacle being configured to electrically connect to a sub-distribution box at a core load side; and
a bypass switch connected between the grid-connected receptacle and the off-grid receptacle, wherein:
the bypass switch is configured to be switched on in a grid-connected operation mode of the all-in-one energy storage unit, enabling electrical energy provided by a grid to be supplied to the sub-distribution box through the main distribution box and the bypass switch, and/or enabling electrical energy provided by the all-in-one energy storage unit to be supplied to the sub-distribution box through the grid-connected port, the first pluggable connector, the grid-connected receptacle, the bypass switch, and the off-grid receptacle;
the bypass switch is further configured to be switched off in response to a detection of a power outage of the grid and switching of the all-in-one energy storage unit to an off-grid operation mode, enabling the electrical energy provided by the all-in-one energy storage unit to be supplied to the sub-distribution box through the off-grid port, the second pluggable connector and the off-grid plug, and keeping continuous power supply to the sub-distribution box during the switching; and
the first pluggable connector and the second pluggable connector are capable of being unplugged from the grid-connected/off-grid socket, to separate the all-in-one energy storage unit from the grid-connected/off-grid socket.
